# EUROPEAN PATENT SPECIFICATION

(11) **EP 3 815 953 B1**
(45) Date of publication and mention of the grant of the patent: **04.05.2022**
(21) Application number: 19206292.5
(22) Date of filing: 30.10.2019
(51) Int. Cl.: B60L 5/38

(54) **ELECTRICALLY PROPELLABLE VEHICLE COMPRISING A CURRENT COLLECTOR**
ELEKTRISCH ANTREIBBARES FAHRZEUG, EINEN STROMABNEHMER UMFASSEND
VÉHICULE PROPULSABLE ÉLECTRIQUEMENT COMPRENANT UN COLLECTEUR DE COURANT

(43) Date of publication of application: 05.05.2021
(73) Proprietor: Elways AB, 171 60 Solna (SE)
(72) Inventor: Asplund, Gunnar, 171 60 Solna (SE)
(74) Representative: Groth & Co. KB

(56) References cited:
- WO-A1-2018/149492
- CN-A- 107 225 976
- DE-U1-202011 107 692
- GB-A- 2 554 058
- TW-A- 200 940 375
- US-A1- 2019 263 267

## Description

### TECHNICAL FIELD

The invention relates to an electrically propellable vehicle comprising a current collector adapted to co-act with a rail element being located in a road section on which the vehicle is adapted to travel, the rail element being provided with at least one electric conductor being adapted to be put under voltage for supplying electric power to the vehicle. The invention further relates to a corresponding method.

### BACKGROUND

Concerns about the environmental impact of combustion of fossil fuels have led to an increased interest in electric vehicles, which have several potential benefits compared to vehicles with conventional internal combustion engines, including: a significant reduction of urban air pollution, as they do not emit harmful tailpipe pollutants from the on-board source of power at the point of operation; reduced greenhouse gas emissions from the on-board source of power, depending on the fuel and technology used for electricity generation and/or charging the batteries and reduced dependency on fossil fuels with increasingly variable supply and fluctuating prices.

However, the expense, weight and limited capacity of the lithium-ion battery packs of today limit widespread use of electric power as the main source of power in vehicles.

WO 2011/123046 proposes complementing the battery of the electric vehicle with electric feeding of the vehicle while driving. A system is disclosed for electric propulsion of a vehicle along a road comprising rail elements/structures having grooves provided with electric conductors therein that may be put under voltage and located in longitudinal tracks or channels in the road. The vehicle is equipped with a current collector which during contact with the electric conductors allows for transfer of electric power between the electric conductors and the vehicle to propel the vehicle and charge its battery or set of batteries. One problem with the current collector in this publication is that its vertical extension may be too high to be used in electric passenger cars, which often have quite low ground clearance due to the battery pack being arranged in the floor pan of the car.

WO2018149492 A1 discloses a charging device for a vehicle for driving on an electrical road system comprising a charging surface configured to provide electrical power to the vehicle via the charging device. The charging device comprises a base, a linkage arm, and an electrical contact element and a pivot joint arranged for allowing a movement of the contact element around an axis.

### SUMMARY

An object of the invention is to solve or improve on the problem mentioned above in the background section.

These and other objects are achieved by the present invention by means of an electrical propellable vehicle and a method for providing an electrical connection according to the independent claims.

According to the invention, an electrically propellable vehicle is provided, which vehicle comprises at least one current collector, each being adapted to co-act with at least one rail element comprising at least one electric conductor, which may be arranged in at least one groove in the rail element, and being adapted to be put under voltage for supplying electric power to the vehicle, the at least one rail element being located in or on a road section on which the vehicle is adapted to travel, wherein each current collector comprises at least one contact element, each contact element being adapted to connect mechanically and electrically with a corresponding contact portion of the at least one electric conductor. The vehicle further comprises a sliding device being displaceable in a lateral direction of the vehicle at an underside thereof. Each current collector may be rotatably connected to the sliding device to rotate around a rotational axis between a folded-down position where the at least one contact element of the current collector is substantially vertically disposed, and a folded-up position where the at least one contact element is non-vertically disposed. The at least one contact element of the current collector may be vertically displaceable relative the vehicle or relative sliding device in the folded-down position. The rotational axis and a longitudinal direction of the vehicle forms an angle of less than 10 degrees

The invention is based on the insight that the vertical height of the current collector may be substantially reduced when not in use by making the contact element, or current collector as a whole, rotatable around an axis of rotation, and in particular rotatable or foldable in a sideways/upwards (lateral/vertical) direction towards the underside of the vehicle, and vice versa when electrical feeding is to start. In embodiments, the vertical height may be reduced by making the contact element, or the current collector as a whole, rotatable not only backwards/upwards (longitudinally/vertically) but also sideways/upwards (laterally/vertically), which in general terms may be described as rotatable around two non-parallel axes of rotation, and two perpendicular axes of rotation in particular. In this manner, the current collector, having a contact element which must have a certain vertical extension to be able to extend into the groove of the rail element to make contact with its conductor(s), can be folded in two directions to substantially reduce its height.

In embodiments, the rotational axis is substantially parallel with a longitudinal direction of the vehicle. In such embodiments, the current collector is advantageously disposed substantially in abutment or substantially parallel with the underside of the vehicle in the folded-up position. The contact element, or the current collector as a whole, may furthermore be disposed substantially horizontally in the folded-up position. In embodiments, the current collector or the contact element thereof may be almost horizontal or parallel within the underside of the vehicle.

In embodiments, the current collector has a height of less than 30 mm, preferably less than 20 mm, in the folded-up or raised position.

In embodiments, the current collector comprises at least one collector arm, each having a first end portion being rotatably attached to the sliding device to rotate around the rotational axis, and a second end portion to which the contact element is connected. The at least one contact element may be vertically displaceable by means of the collector arm being a telescopic arm. Alternatively, the at least one contact element may be vertically displaceable by means of the first end portion of each contact element further being rotatable around an additional rotational axis disposed at an angle relative to the rotational axis, which additional rotational axis is advantageously perpendicular to the rotational axis. Furthermore, the current collector may comprise two collector arms, which may be arranged in parallel, and wherein the second end portions of the two collector arms are rotatably connected to the contact element.

In alternative embodiments, the at least one collector arm may be considered part of the sliding device, where the at least one contact is rotatably connected to the sliding device by being rotatably connected to the second end of the collector arm to rotate around the above described rotational axis. In such an alternative embodiment, the at least one contact element is vertically displaceable relative the vehicle in the folded-down position.

In embodiments, the contact element is rotatable relative the vehicle or relative the sliding device around a second additional axis which forms an angle with the rotational axis, which second additional axis preferably is a substantially lateral axis. The rotation around a substantially lateral axis may be provided by means of at least one of said two collector arms having a variable length, or by means of the two collector arms being rotatably connected to the sliding device with a variable distance therebetween, for instance by one of the collector arms being connected to the sliding device by means of a pin at the first end portion being slidably arranged in slit, slot or elongated hole. Such embodiments are advantageous since the minimum vertical height in the folded-down position may be reduced.

In embodiments, the sliding device is laterally movable by being attached to a first end of at least one elongated arm extending along an underside of the vehicle, wherein a second end of the at least one elongated arm is rotatably attached to the vehicle around a rotational axis, preferably a vertical rotational axis. Preferably, two elongated arms are provided in parallel and rotatably connected at both ends to the sliding device and the vehicle, such that the sliding device is maintained in parallel with the vehicle at all times. A lateral support member may be provided at an underside of the vehicle in sliding engagement with the sliding device and/or said second end to provide vertical support thereto, for instance by being arranged beneath the sliding device and/or the second end. Furthermore, at least one electrical cable may be disposed along the length of one or more elongated arm to connect the contact element(s) electrically to the vehicle. Furthermore, various means for laterally displacing the sliding device may be provided such as one or more laterally extending wires driven by one or more electrical motors, which wire(s) are connected to the sliding device to provide lateral displacement. Furthermore, a protective cover may be arranged beneath the at least one elongated arm to protect the elongated arm(s), and optionally also the cable(s) and/or wire(s) and/or parts of the sliding device.

The sliding device is laterally movable and may be slidably arranged on a laterally extending bar or rail.

The electrically propellable vehicle may further comprise means for generating a magnetic field and means for sensing a variation of a generated magnetic field, the means for generating and the means for sensing being attached directly or indirectly to the sliding device, wherein the means for sensing is configured to generate a signal correlated to a horizontal distance between the means for generating a magnetic field and metal parts of the rail element, wherein the sliding device and/or current collector is/are provided with actuating means configured to, in response to the signal, displace the sliding device in the lateral direction to allow contact with the rail element, and to displace the current collector to the folded-down position and to lower the current collector, by rotations around the rotational and/or additional rotational axes, to make contact with the rail element while moving the sliding device laterally until the contact element(s) slide(s) into the groove(s). The means for generating and sensing a magnetic field may comprise coils as described in applicants' own patent EP2552735. In other embodiments, one or more optical sensors are provided, which is/are configured to generate a signal corresponding to the horizontal distance between the sliding device and the rail element and/or a discrete signal indicating if the sliding device is laterally aligned with the rail element or not.

The invention further concerns a method for providing an electrical connection between a current collector of an electrically propellable vehicle and a rail element being located in a road section on which the vehicle is adapted to travel, the rail element comprising at least one electric conductor arranged in at least one groove in the rail element and being adapted to be put under voltage for supplying electric power to the vehicle, wherein the current collector comprises at least one contact element, each contact element being adapted to connect mechanically and electrically with a corresponding contact portion of the at least one electric conductor. The method comprises displacing the current collector relative to the vehicle in a lateral direction of the vehicle to laterally align the current collector with the rail element, rotating the current collector around a rotational axis which forms an angle of less than 10 degrees with a longitudinal direction of the vehicle in a downwards and lateral direction from a folded-up position where the contact element is substantially in abutment with an underside of the vehicle to a folded-down position where the contact element is disposed vertically, and displacing the contact element vertically to make contact with the corresponding contact portion.

### BRIEF DESCRIPTION OF THE DRAWINGS

Above discussed and other aspects of the present invention will now be described in more detail using the appended drawings, which show presently preferred embodiments of the invention, wherein:
fig. 1 shows a top view of parts of a vehicle according to the invention where the current collectors are in folded-up position;
fig. 2 shows a top view of the embodiment in fig. 1, with the current collectors in a folded-down position;
fig. 3 shows a cross-section view of the embodiment in figs. 1-2 shown with a rail element, where the current collectors are in a folded-up position;
fig. 4 shows a cross-section view of the same embodiment and rail element as in fig. 3, but with the current collectors in a folded-down position;
fig. 5 shows the cross-section view as in fig. 4, but with the contact elements of the current collectors in contact with the rail element;
fig. 6 shows a side view of a part of another vehicle according to the invention;
fig. 7 shows a side view of a part of yet another vehicle according to the invention, and
fig. 8 shows a vehicle according to the invention.

### DETAILED DESCRIPTION

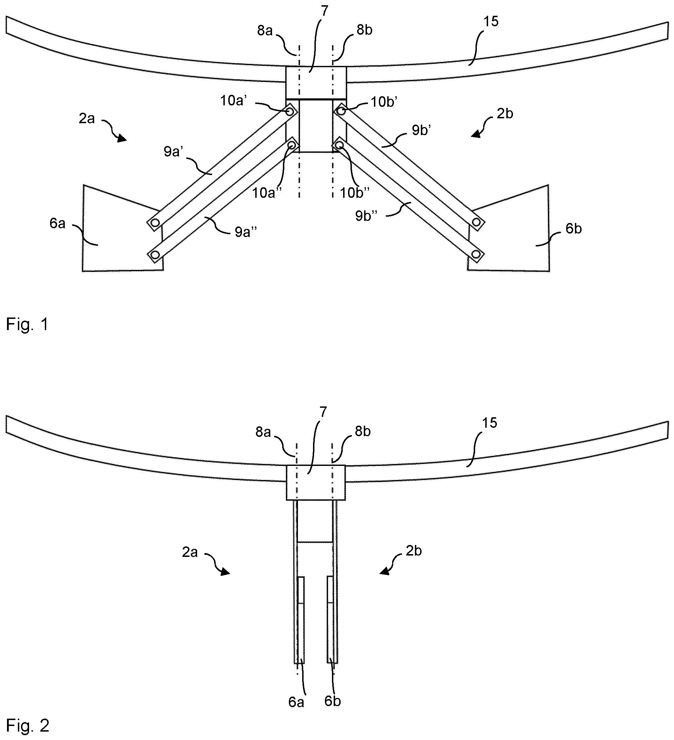

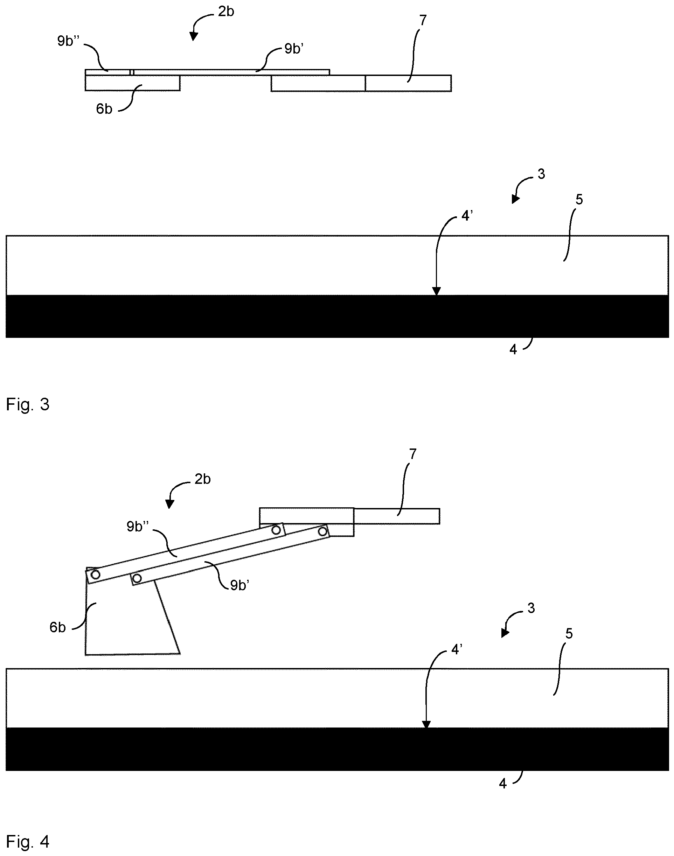

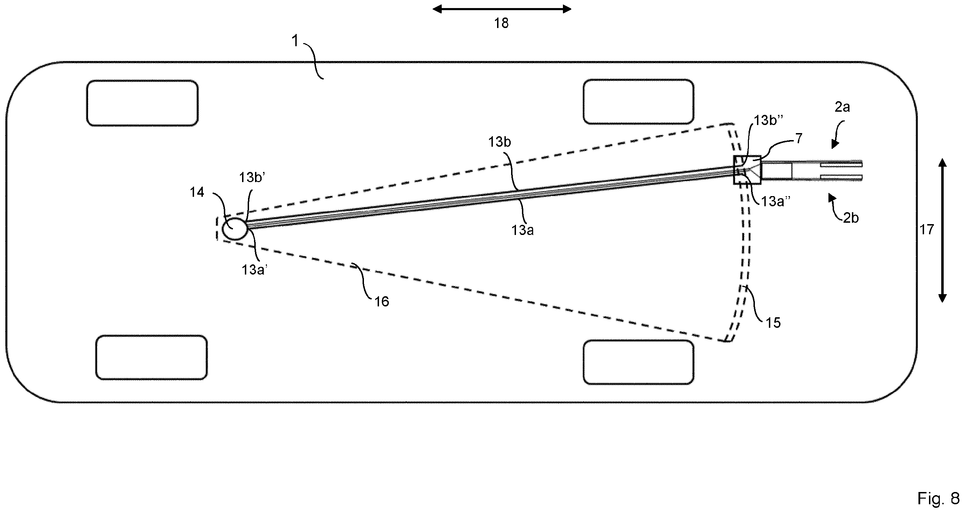

Fig. 1 shows a top view of parts of an embodiment of the invention where the current collectors are in folded-up position. Two current collectors 2a, 2b are shown each comprising a contact element 6a, 6b, each contact element being adapted to connect mechanically and electrically with a corresponding contact portion of an electric conductor arranged in a groove in a rail element being located in a road section on which the vehicle is adapted to travel (see fig. 3-5). A sliding device 7 is displaceable in a lateral direction of the vehicle (ref. 17, see fig. 8), i.e. a transversal direction relative a direction of travel along a lateral support member 15 provided at an underside of the vehicle, which also provides vertical support for the sliding device. The lateral movement of sliding device 7 is further explained below with reference to fig. 8. The current collector 2a comprises collector arms 9a', 9a" arranged in parallel and rotatably connected at first ends thereof around rotation points or axes 10a', 10a" to the sliding device, and rotatably connected at seconds ends thereof to the contact element 6a. The current collector 2b comprises collector arms 9b', 9b" in a corresponding manner. The current collectors 2a, 2b are furthermore rotatable around rotational axes 8a, 8b by means of the connections at 10a', 10a", 10b', 10b" being made to hinge portions of the sliding device 7 being foldable or rotatable around the rotational axes 8a, 8b relative the rest of the sliding device. In this embodiment, the rotational axes are parallel with a longitudinal or lengthwise direction of the vehicle. In fig. 1, the current collectors are shown in a folded-up or raised position where the current collectors are disposed in a horizontal plane (see also fig. 3). Depending on the vehicle, the current collectors may be arranged in parallel with the floor pane/underside of the vehicle in this position, or even in abutment with the underside of the vehicle. The contact elements may furthermore be displaceable in the horizontal plane forwards or backwards relative the position shown in fig. 1 to reduce the lateral or longitudinal extension, if required. In this position, the current collector has a height of less than 20 mm.

Fig. 2 shows a top view of the embodiment in fig. 1, with the current collectors 2a, 2b in folded-down or lowered positions. As can be seen in the figure, the collector arms and the contact elements 6a, 6b are vertically disposed, i.e. disposed in respective vertical planes. The contact elements 6a, 6b of the current collectors are vertically displaceable relative the sliding device in the folded-down position by rotating the collector arms 9a', 9a", 9b', 9b" around connections 10a', 10a", 10b', 10b".

Fig. 3 shows a cross-section view of the embodiment in figs. 1-2 shown with a rail element 3, where the shown current collector 2b is in a folded-up position, i.e. the same position as shown in fig. 1. The rail element 3, shown in cross section along a center line or longitudinal axis thereof, comprises an electric conductor 4 having a contact portion 4' arranged in a groove 5 of the rail element.

Fig. 4 shows a cross-section view of the same embodiment and rail element as in fig. 3, but with the current collectors in a folded-down position, i.e. after the current collector 2b has been rotated 90 degrees around rotational axis 8b (see fig. 1) relative the sliding device 7. The collector arms 9b', 9b" are in abutment with each other, illustrating the highest possible vertical position of the contact element 6b in the folded-down position, where the contact element 6b is disposed above ground and above the rail element to allow the sliding device 7 to move in the lateral direction.

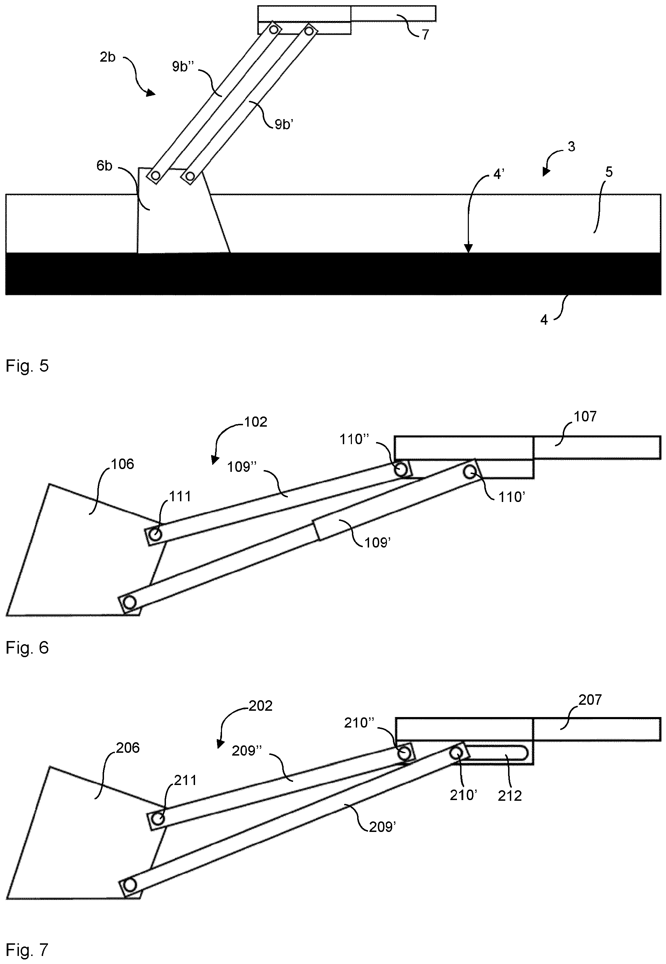

Fig. 5 shows the cross-section view as in fig. 4, but with the contact element 6b of the current collector 2b vertically lowered into the groove 5 of the rail element 4 such that the contact element makes electrical and mechanical contact with the contact portion 4' of the electric conductor 4. It is understood that the vertical alignment of the contact element 6b is appropriate to allow the contact element to be lowered into the (vertical) groove of the rail element.

Fig. 6 shows a side view of another embodiment of parts of an electrically propellable vehicle according to the invention. Just like the embodiment in figures 1-5, it comprises a laterally movable sliding device 107 and a current collector 102 comprising collector arms 109', 109" rotatable around a rotational axis parallel with the longitudinal direction of the vehicle and around additional rotational axes defined by respective connections 110', 110", and a contact element 106 to which opposite ends of the collector arms are rotatably attached. This embodiment differs from the embodiment in figures 1-5 in that the contact element 106 is rotatable relative the vehicle or relative the sliding device around a second additional axis coinciding with the attachment 111 of the collector arm 109" to the contact element. The second additional rotational axis is parallel with the additional rotational axis and is thus also a lateral axis. This rotation is achieved since the collector arm 109' is a telescopic arm, thus having a variable length. Compared to the embodiment in figures 1-5, the minimum vertical height in the folded-down position is reduced.

Fig. 7 shows a side view of yet another embodiment of the invention. This embodiment corresponds to the embodiment in figure 6, except for that both collector arms 209', 209" of the current collector 202 are fixed in length, and in that the sliding device 207 is provided with an elongated hole or slit 212 in which a pin-shaped portion of the rotational connection 210' of collector arm 209' is slidably disposed to allow rotation of contact element 206 around attachment 211. Compared to the embodiment in figures 1-5, the minimum vertical height in the folded-down position is reduced.

Fig. 8 shows a plane view from below of an electrically propellable vehicle 1 according to the invention, which embodiment comprises current collectors 2a, 2b as shown in figs. 1-5. The sliding device 7 is laterally movable along arc-shaped lateral support member 15 (not seen in this view, but illustrated with dotted lines) by being rotatably attached to to first ends 13a", 13b" of two parallel elongated arms 13a, 13b extending along an underside of the vehicle, wherein second ends 13a', 13b' of the arms are rotatably attached to the vehicle around a vertical rotational axis 14. Since the arms are parallel, the sliding device is maintained in parallel with the vehicle at all times. Two electrical cables are disposed along the length of the arms 13a, 13b and connect the contact elements 2a, 2b electrically to the vehicle. A protective cover 16 (not seen in this view, but illustrated with dotted lines) is arranged beneath the arms 13a, 13b to protect the arms, the cables and the lateral support member 15.

Furthermore, although not illustrated in the figures above, the vehicle may comprise means for positioning the sliding device laterally, for instance as described in EP2552735, and further in the summary section above. Furthermore, it is understood that the sliding device and/or the current collectors may be provided with position sensors and actuators, which may be of electric, hydraulic or pneumatic type, to provide the above described rotations and displacements of the contact elements. Such sensors and actuators are considered known to the person skilled in the art and are thus not further explained herein.

The description above and the appended drawings are to be considered as nonlimiting examples of the invention. The person skilled in the art realizes that several changes and modifications may be made within the scope of the invention. For example, the current collector does not necessarily need to have the shown "plow shape" but may for instance be round to rotate against a bottom contact portion or vertical side wall contact portion of the electric conductor, or any other shape which is suitable for achieving the desired electric contact. Furthermore, the current collector does not necessarily need to have two collector arms, but may for instance have only one collector arm. Furthermore, the current collector does not necessarily need to be rotatable relative the sliding device around the rotational axis by means of a hinge, but may for instance be achieved using an axle and bearing arrangement or any other suitable device to provide such rotation.

## Claims

1. Electrically propellable vehicle (1) comprising at least one current collector (2a, 2b; 102; 202), the at least one current collector being adapted to co-act with at least one rail element (3) comprising at least one electric conductor (4) arranged in at least one groove (5) in said rail element and being adapted to be put under voltage for supplying electric power to said vehicle, said at least one rail element (3) being located in a road section on which the vehicle is adapted to travel, wherein the at least one current collector (2a, 2b; 102; 202) comprises at least one contact element (6a, 6b; 106; 206), each contact element being adapted to connect mechanically and electrically with a corresponding contact portion (4') of the at least one electric conductor (4), further comprising a sliding device (7; 107; 207) being displaceable in a lateral direction (17) of the vehicle (1) at an underside thereof, **characterized in that** the at least one current collector (2a, 2b, 102, 202) is rotatably connected to the sliding device (7) to rotate around a rotational axis (8a, 8b) which forms an angle of less than 10 degrees with a longitudinal direction (18) of the vehicle, said at least one current collector (2a, 2b, 102, 202) being arranged to rotate around said rotational axis (8a, 8b) between a folded-down position where the at least one contact element of said current collector is substantially vertically disposed, and a folded-up position where the at least one contact element is non-vertically disposed, and wherein the at least one contact element (6a, 6b; 106; 206) of said current collector is vertically displaceable relative to the vehicle in said folded-down position.

2. Electrically propellable vehicle according to any of the preceding claims, wherein the contact element (6a, 6b; 106; 206) is disposed substantially horizontally in said folded-up position.

3. Electrically propellable vehicle according to any of the preceding claims, wherein said at least one current collector (2a, 2b, 102, 202) comprises at least one collector arm (9a', 9a", 9b', 9b"; 109', 109"; 209', 209"), each having a first end portion being rotatably attached to the sliding device to rotate around said rotational axis (8), and a second end portion to which the contact element is connected.

4. Electrically propellable vehicle according to claim 3, wherein the at least one contact element (6a, 6b; 106; 206) is vertically displaceable relative to the vehicle in said folded down position by means of the first end portion of each collector arm further being rotatable around an additional rotational axis (10a', 10a", 10b', 10b"; 110', 110"; 210', 210") disposed at an angle relative to said rotational axis (8a, 8b).

5. Electrically propellable vehicle according to claim 4, wherein said current collector comprises two collector arms (9a', 9a", 9b', 9b"; 109', 109"; 209', 209").

6. Electrically propellable vehicle according to claim 5, wherein said two collector arms (9a', 9a", 9b', 9b"; 109', 109") are arranged in parallel, and wherein the second end portions of said two collector arms are rotatably connected to said contact element.

7. Electrically propellable vehicle according to claim 3, wherein the at least one contact element is vertically displaceable by means of the at least one collector arm being a telescopic arm.

8. Electrically propellable vehicle according to any of the preceding claims, wherein said contact element (106; 206) is rotatable relative the vehicle around a substantially lateral axis (111; 211).

9. Electrically propellable vehicle according to claim 8 as dependent on claim 5, wherein said rotation around a substantially lateral axis (111; 211) is provided by means of at least one (109') of said two collector arms (109', 109") having a variable length, or by means of one of the collector arms (209') being connected to the sliding device (207) by means of a pin at the first end portion being slidably arranged in an elongated hole or slit (212) in said sliding device.

10. Electrically propellable vehicle according to any of the preceding claims, wherein said sliding device (7) is laterally movable by being attached to a first end (13a", 13b") of at least one elongated arm (13a, 13b) extending along an underside of the vehicle, wherein a second end (13a', 13b') of said at least one elongated arm is rotatably attached to the vehicle around a rotational axis (14), wherein a lateral support member (15) is provided at an underside of the vehicle beneath said sliding device (7) and/or said second end (13a', 13b') to provide vertical support thereto.

11. Electrically propellable vehicle according to claim 10, further comprising a protective cover (16) arranged beneath said at least one elongated arm (13a, 13b).

12. Electrically propellable vehicle according to any of the preceding claims, wherein said at least one current collector (2a, 2b, 102, 202) has a height of less than 20 mm in said folded-up position.

13. Method for providing an electrical connection between a current collector (2a, 2b; 102; 202) of an electrically propellable vehicle (1) and a rail element (3) being located in a road section on which the vehicle is adapted to travel, said rail element comprising at least one electric conductor (4) arranged in at least one groove (5) in said rail element and being adapted to be put under voltage for supplying electric power to said vehicle, wherein the current collector comprises at least one contact element (6a, 6b; 106; 206), each contact element being adapted to connect mechanically and electrically with a corresponding contact portion (4') of the at least one electric conductor, said method comprising:
- displacing the current collector relative to the vehicle in a lateral direction of the vehicle to laterally align the current collector with said rail element;
**characterized by:**
- rotating the current collector around a rotational axis (8a, 8b) which forms an angle of less than 10 degrees with a longitudinal direction (18) of the vehicle in a downwards and lateral direction from a folded-up position where the contact element is substantially in abutment with an underside of the vehicle to a folded-down position where the contact element is disposed substantially vertically, and
- displacing the contact element vertically to make contact with said corresponding contact portion.

## Patentansprüche

1. Elektrisch antreibbares Fahrzeug (1), das mindestens einen Stromsammler (2a, 2b; 102; 202) umfasst, wobei der mindestens eine Stromsammler angepasst ist, zusammen mit mindestens einem Schienenelement (3) zu agieren, das mindestens einen elektrischen Leiter (4) umfasst, der in mindestens einer Nut (5) in dem Schienenelement angeordnet und angepasst ist, unter Spannung gesetzt zu werden, um dem Fahrzeug elektrische Energie zuzuführen, wobei sich das mindestens eine Schienenelement (3) in einem Straßenbereich befindet, in dem das Fahrzeug angepasst ist zu fahren, wobei der mindestens eine Stromsammler (2a, 2b; 102; 202) mindestens ein Kontaktelement (6a, 6b; 106; 206) umfasst, wobei jedes Kontaktelement angepasst ist, sich mechanisch und elektrisch mit einem entsprechenden Kontaktabschnitt (4') des mindestens einen elektrischen Leiters (4) zu verbinden, ferner eine Gleitvorrichtung (7; 107; 207) umfasst, die in einer Seitenrichtung (17) des Fahrzeugs (1) auf einer Unterseite davon versetzbar ist,
**dadurch gekennzeichnet, dass** der mindestens eine Stromsammler (2a, 2b; 102; 202) drehbar mit der Gleitvorrichtung (7) verbunden ist, um sich um eine Drehachse (8a, 8b) zu drehen, die mit einer Längsrichtung (18) des Fahrzeugs einen Winkel von weniger als 10 Grad bildet, wobei der mindestens eine Stromsammler (2a, 2b; 102; 202) angeordnet ist, sich zwischen einer heruntergeklappten Position, in der das mindestens eine Kontaktelement des Stromsammlers im Wesentlichen vertikal positioniert ist, und einer hochgeklappten Position, in der das mindestens eine Kontaktelement nicht vertikal positioniert ist, um die Drehachse (8a, 8b) zu drehen, und wobei das mindestens eine Kontaktelement (6a, 6b; 106; 206) des Stromsammlers relativ zum Fahrzeug in der heruntergeklappten Position vertikal versetzbar ist.

2. Elektrisch antreibbares Fahrzeug nach einem der vorhergehenden Ansprüche, wobei das Kontaktelement (6a, 6b; 106; 206) in der hochgeklappten Position im Wesentlichen horizontal positioniert ist.

3. Elektrisch antreibbares Fahrzeug nach einem der vorhergehenden Ansprüche, wobei der mindestens eine Stromsammler (2a, 2b, 102, 202) mindestens einen Sammlerarm (9a', 9a", 9b', 9b"; 109', 109"; 209', 209"), umfasst, von denen jeder einen ersten Endabschnitt, der drehbar an der Gleitvorrichtung befestigt ist, um sich um die Drehachse (8) zu drehen, und einen zweiten Endabschnitt, mit dem das Kontaktelement verbunden ist, aufweist.

4. Elektrisch antreibbares Fahrzeug nach Anspruch 3, wobei das mindestens eine Kontaktelement (6a, 6b; 106; 206) in der heruntergeklappten Position relativ zum Fahrzeug vertikal versetzbar ist, da der erste Endabschnitt jedes Sammlerarms ferner um eine zusätzliche Drehachse (10a', 10a", 10b', 10b"; 110', 110"; 210', 210") drehbar ist, die relativ zur Drehachse (8a, 8b) in einem Winkel positioniert ist.

5. Elektrisch antreibbares Fahrzeug nach Anspruch 4, wobei der Stromsammler zwei Sammlerarme (9a', 9a", 9b', 9b"; 109', 109"; 209', 209") umfasst.

6. Elektrisch antreibbares Fahrzeug nach Anspruch 5, wobei die zwei Sammlerarme (9a', 9a", 9b', 9b"; 109', 109") parallel angeordnet sind und wobei die zweiten Endabschnitte der zwei Sammlerarme drehbar mit dem Kontaktelement verbunden sind.

7. Elektrisch antreibbares Fahrzeug nach Anspruch 3, wobei das mindestens eine Kontaktelement vertikal versetzbar ist, da es sich bei dem mindestens einen Sammlerarm um einen Teleskoparm handelt.

8. Elektrisch antreibbares Fahrzeug nach einem der vorhergehenden Ansprüche, wobei das Kontaktelement (106; 206) relativ zum Fahrzeug um eine im Wesentlichen seitliche Achse (111; 211) drehbar ist.

9. Elektrisch antreibbares Fahrzeug nach Anspruch 8, sofern von Anspruch 5 abhängig, wobei die Drehung um eine im Wesentlichen seitliche Achse (111; 211) bereitgestellt wird, da mindestens einer (109') der zwei Sammlerarme (109', 109") eine variable Länge aufweist oder da einer der Sammlerarme (209') mittels eines Stifts am ersten Endabschnitt, der gleitbar in einem Längsloch oder einem Schlitz (212) in der Gleitvorrichtung angeordnet ist, mit der Gleitvorrichtung (207) verbunden ist.

10. Elektrisch antreibbares Fahrzeug nach einem der vorhergehenden Ansprüche, wobei die Gleitvorrichtung (7) seitlich bewegbar ist, da sie an einem ersten Ende (13a", 13b") von mindestens einem Längsarm (13a, 13b), der sich entlang einer Unterseite des Fahrzeugs erstreckt, befestigt ist, wobei ein zweites Ende (13a', 13b') des mindestens einen Längsarms um eine Drehachse (14) drehbar am Fahrzeug befestigt ist, wobei ein seitliches Stützelement (15) an einer Unterseite des Fahrzeugs unter der Gleitvorrichtung (7) und/oder dem zweiten Ende (13a', 13b') bereitgestellt ist, um eine vertikale Stütze dafür bereitzustellen.

11. Elektrisch antreibbares Fahrzeug nach Anspruch 10, das ferner eine Schutzabdeckung (16) umfasst, die unter dem mindestens einen Längsarm (13a, 13b) angeordnet ist.

12. Elektrisch antreibbares Fahrzeug nach einem der vorhergehenden Ansprüche, wobei der mindestens eine Stromsammler (2a, 2b, 102, 202) in der hochgeklappten Position eine Höhe von weniger als 20 mm aufweist.

13. Verfahren zum Bereitstellen einer elektrischen Verbindung zwischen einem Stromsammler (2a, 2b; 102; 202) eines elektrisch antreibbaren Fahrzeugs (1) und einem Schienenelement (3), das sich in einem Straßenbereich befindet, in dem das Fahrzeug angepasst ist zu fahren, wobei das Schienenelement mindestens einen elektrischen Leiter (4) umfasst, der in mindestens einer Nut (5) in dem Schienenelement angeordnet und angepasst ist, unter Spannung gesetzt zu werden, um dem Fahrzeug elektrische Energie zuzuführen, wobei der Stromsammler mindestens ein Kontaktelement (6a, 6b; 106; 206) umfasst, wobei jedes Kontaktelement angepasst ist, sich mechanisch und elektrisch mit einem entsprechenden Kontaktabschnitt (4') des mindestens einen elektrischen Leiters zu verbinden, wobei das Verfahren Folgendes umfasst:
- Versetzen des Stromsammlers relativ zum Fahrzeug in eine Seitenrichtung des Fahrzeugs, um den Stromsammler seitlich auf das Schienenelement auszurichten.
**gekennzeichnet durch:**
- Drehen des Stromsammlers um eine Drehachse (8a, 8b), die mit einer Längsrichtung (18) des Fahrzeugs einen Winkel von weniger als 10 Grad bildet, aus einer hochgeklappten Position, in der das Kontaktelement im Wesentlichen an einer Unterseite des Fahrzeugs anliegt, in einer Abwärts- und einer Seitenrichtung in eine heruntergeklappte Position, in der das Kontaktelement im Wesentlichen vertikal positioniert ist, und
- Versetzen des Kontaktelements, um einen Kontakt mit dem entsprechenden Kontaktabschnitt herzustellen.

## Revendications

1. Véhicule propulsable électriquement (1) comprenant au moins un collecteur de courant (2a, 2 ; 102 ; 202), ledit au moins un collecteur de courant étant conçu pour coopérer avec au moins un élément de rail (3) comprenant au moins un conducteur électrique (4) agencé dans au moins une rainure (5) dans ledit élément de rail et étant conçu pour être mis sous tension afin de fournir de la puissance électrique audit véhicule, ledit au moins un élément de rail (3) étant situé dans une section de route sur laquelle le véhicule est conçu pour circuler, ledit au moins un collecteur de courant (2a, 2 ; 102 ; 202) comprenant au moins un élément de contact (6a, 6b ; 106 ; 206), chaque élément de contact étant conçu pour se raccorder mécaniquement et électriquement à une portion de contact correspondante (4') de l'au moins un conducteur électrique (4), incluant en outre un dispositif coulissant (7 ; 107 ; 207) pouvant être déplacé dans une direction latérale (17) du véhicule (1) au niveau d'un dessous de celui-ci, **caractérisé en ce que ledit** au moins un collecteur de courant (2a, 2b, 102, 202) est raccordé de façon à pouvoir entrer en rotation au dispositif coulissant (7) pour entrer en rotation autour d'un axe de rotation (8a, 8b) qui forme un angle inférieur à 10 degrés avec une direction longitudinale (18) du véhicule, ledit au moins un collecteur de courant (2a, 2b, 102, 202) étant agencé pour entrer en rotation autour dudit axe de rotation (8a, 8b) entre une position pliée vers le bas où ledit au moins un élément de contact dudit collecteur de courant est disposé substantiellement verticalement, et une position pliée vers le haut où ledit au moins un élément de contact est disposé de façon non verticale, et ledit au moins un élément de contact (6a, 6b, 106 ; 206) dudit collecteur de courant pouvant être déplacé verticalement relativement au véhicule dans ladite position pliée vers le bas.

2. Véhicule propulsable électriquement selon l'une quelconque des revendications précédentes, dans lequel l'élément de contact (6a, 6a ; 106 ; 206) est disposé substantiellement horizontalement dans ladite position pliée vers le haut.

3. Véhicule propulsable électriquement selon l'une quelconque des revendications précédentes, dans lequel ledit au moins un collecteur de courant (2a, 2b, 102, 202) comprend au moins un bras de collecteur (9a', 9a", 9b', 9b", ; 109', 109" ; 209', 209"), chacun ayant une première portion d'extrémité attachée de façon à pouvoir entrer en rotation au dispositif coulissant pour entrer en rotation autour dudit axe de rotation (8), et une deuxième portion d'extrémité à laquelle l'élément de contact est raccordé.

4. Véhicule propulsable électriquement selon la revendication 3, dans lequel ledit au moins un élément de contact (6a, 6a ; 106 ; 206) peut être déplacé verticalement relativement au véhicule dans ladite position pliée vers le bas grâce au fait que la première portion d'extrémité de chaque bras de collecteur peut en outre entrer en rotation autour d'un axe de rotation supplémentaire (10a', 10a", 10b', 10b" ; 110', 110" ; 210', 210") disposé en angle relativement audit axe de rotation (8a, 8b).

5. Véhicule propulsable électriquement selon la revendication 4, dans lequel ledit collecteur de courant comprend deux bras collecteurs (9a', 9a", 9b', 9b" ; 109', 109" ; 209', 209").

6. Véhicule propulsable électriquement selon la revendication 5, dans lequel lesdits deux bras de collecteur (9a', 9a", 9b', 9b" ; 109', 109") sont agencés en parallèle, et dans lequel les deuxièmes portions d'extrémité desdits deux bras de collecteur sont raccordées de façon à pouvoir entrer en rotation audit élément de contact.

7. Véhicule propulsable électriquement selon la revendication 3, dans lequel l'au moins un élément de contact peut être déplacé verticalement au moyen de l'au moins un bras de collecteur qui est un bras télescopique.

8. Véhicule propulsable électriquement selon l'une quelconque des revendications précédentes, dans lequel ledit élément de contact (106 ; 206) peut entrer en rotation relativement au véhicule autour d'un axe substantiellement latéral (111 ; 211).

9. Véhicule propulsable électriquement selon la revendication 8 lorsque dépendante de la revendication 5, dans lequel ladite rotation autour d'un axe substantiellement latéral (111 ; 211) est prévue grâce au fait qu'au moins l'un (109') desdits deux bras de collecteur (109', 109") a une longueur variable, ou au fait que l'un des bras de collecteur (209') qui est raccordé au dispositif coulissant (207) grâce au fait qu'une broche au niveau de la première portion d'extrémité est agencée de façon coulissante dans une fente ou un trou allongé (212) dans ledit dispositif coulissant.

10. Véhicule propulsable électriquement selon l'une quelconque des revendications précédentes, dans lequel ledit dispositif coulissant (7) est mobile latéralement grâce au fait qu'il est attaché à une première extrémité (13a", 13b") d'au moins un bras allongé (13a, 13b) s'étendant le long d'un dessous du véhicule, une deuxième extrémité (13a', 13b') dudit au moins un bras allongé étant attachée au véhicule de façon à pouvoir entrer en rotation autour d'un axe de rotation (14), un organe de support latéral (15) étant prévu au niveau d'un dessous du véhicule sous ledit dispositif coulissant (7) et/ou ladite deuxième extrémité (13a', 13b') pour prévoir un support vertical à celui-ci.

11. Véhicule propulsable électriquement selon la revendication 10, comprenant en outre un couvercle de protection (16) agencé sous ledit au moins un bras allongé (13a, 13b).

12. Véhicule propulsable électriquement selon l'une quelconque des revendications précédentes, dans lequel ledit au moins un collecteur de courant (2a, 2b, 102, 202) a une hauteur inférieure à 20 mm dans ladite position pliée vers le haut.

13. Procédé pour prévoir une connexion électrique entre un collecteur de courant (2a, 2 ; 102 ; 202) d'un véhicule propulsable électriquement (1) et un élément de rail (3) étant situé dans une section de route sur laquelle le véhicule est conçu pour circuler, ledit élément de rail comprenant au moins un conducteur électrique (4) agencé dans au moins une rainure (5) dans ledit élément de rail et étant conçu pour être mis sous tension afin de fournir de la puissance électrique audit véhicule, le collecteur de courant comprenant au moins un élément de contact (6a, 6a ; 106 ; 206), chaque élément de contact étant conçu pour se connecter mécaniquement et électriquement à une portion de contact correspondante (4') de l'au moins un conducteur électrique, ledit procédé comprenant :
- le déplacement du collecteur de courant relativement au véhicule dans une direction latérale du véhicule pour aligner latéralement le collecteur de courant avec ledit élément de rail ;
**caractérisé par** :
- la mise en rotation du collecteur de courant autour d'un axe de rotation (8a, 8b) qui forme un angle inférieur à 10 degrés avec une direction longitudinale (18) du véhicule dans une direction vers le bas et latérale à partir d'une position pliée vers le haut où l'élément de contact est substantiellement en butée avec un dessous du véhicule jusqu'à une position pliée vers le bas où l'élément de contact est disposé substantiellement verticalement, et
- le déplacement de l'élément de contact verticalement pour établir un contact avec ladite portion de contact correspondante.
